# EUROPEAN PATENT APPLICATION

(11) **EP 4 576 715 A1**
(43) Date of publication of application: **25.06.2025**
(21) Application number: 23218616.3
(22) Date of filing: 20.12.2023
(51) Int. Cl.: H04L 45/16, H04W 40/24

(54) **METHOD OF SCHEDULING RESOURCES IN A TIME SENSITIVE NETWORK BASED ON A QUALITY OF SERVICE INFORMATION**

(71) Applicant: Robert Bosch GmbH, 70442 Stuttgart (DE)
(72) Inventor: Suer, Marie-Theres, 38102 Braunschweig (DE); Ginthoer, David Osamu, 70197 Stuttgart (DE); Guillaume, Rene, 71032 Boeblingen (DE)

(57) **Abstract**

A method of scheduling resources in a time sensitive network (TSN) (10) comprising a wired TSN and a wireless network based on a quality of service (QoS) information of the wireless network, wherein the method comprises:
- Receiving a QoS information transmitted from a TSN element (16) or a further network element to a central TSN element (18), and/or
- Receiving a network information transmitted from the TSN element (16) to the central TSN element (18) and determining the QoS information based on the received network information by the central TSN element (18),
- wherein the received and/or determined QoS information comprises a performance probability regarding
∘ a time between successful transmissions of two consecutive data packets in the wireless network of the TSN (10), and/or
∘ a number of consecutive data packet losses in the wireless network of the TSN (10),
and

- scheduling resources, by the central TSN element (18), based on the performance probability contained in the received and/or determined QoS information.

## Description

The invention concerns a method of scheduling resources in a time sensitive network (TSN) based on a performance probability contained in a quality of service (QoS) information, and a corresponding method of transmitting and/or receiving a data packet in a TSN using resources scheduled based on a QoS information. Further, the invention concerns a network element of a TSN, a central network element of a TSN, a computer program, and a non-transitory computer readable medium. Moreover, the invention concerns a managed object of a TSN element.

### Background

For a wired time-sensitive network (TSN) the link speeds may be considered to be constant. Therefore, the schedule according to IEEE 802.1Qbv can be calculated once and kept fixed. Wireless communication standards like Wi-Fi and 5G are enhanced by IEEE and 3GPP such that the communication characteristics become more similar to wired networks. This makes it suitable to use these technologies also in combined wired and wireless TSNs. In a wireless TSN, the situation is more dynamic as the surroundings can change over time. As an example, interference from other systems may influence a link speed, a transmission delay, a data rate and a transmission reliability. The resulting link characteristics are reported to the central network configuration (CNC) by the (logical) TSN switches or TSN bridges via link managed objects.

In principle, (logical) TSN bridges exchange with the CNC their capabilities in terms of delay. This includes the bridge delays as well as the delays of the links they are connected to. In this regard, a logical TSN bridge may also refer to functions and components of a wireless communication system, which are integrated into an overall network such that they logically realize the functionality of a traditional TSN bridge. The CNC uses the link and bridge descriptions and the requirements of the talker and listener applications to calculate a TSN schedule for the network.

For providing deterministic guarantees over wireless links the expected lower-bound for the link speed needs to be estimated. A straightforward solution is to factor in sufficient delay budget. With this overprovisioning, the risk of exceeding the deadline is reduced, however at the cost of overall higher latency. The expected deterministic behavior of a wireless TSN system can then be established with a hold and forward buffer at the egress port, as proposed in 3GPP TS 23.501 Section 5.27.4.

A more delay-aware solution comprises adding arrays to the wireless link description object, which list target delay deadlines and the corresponding probabilities to observe delays exceeding these deadlines. This additional information can then be utilized by the CNC to calculate TSN schedules for the network. While classical wired TSN schedules are deterministic, hence always feasible, the schedules taking delay probabilities into account can only provide feasibility within the delay probability.

### Disclosure of the invention

According to a first aspect, there is provided a method of scheduling resources in a TSN comprising a wired TSN and a wireless network based on a QoS information of the wireless network. In other words, for a TSN comprising a wired TSN and a wireless network, there is provided a method scheduling resources based on a QoS information of the wireless network of the TSN.

The method according to the first aspect comprises:
- Receiving a QoS information transmitted from a TSN element or a further network element to a central TSN element, and/or
- Receiving a network information transmitted from the TSN element to the central TSN element and determining the QoS information based on the received network information by the central TSN element,
- wherein the received and/or determined QoS information comprises a performance probability regarding
   ∘ a time between successful transmissions of two consecutive data packets in the wireless network of the TSN and/or
   ∘ a number of consecutive data packet losses in the wireless network of the TSN;
   and
- Scheduling resources, by the central TSN element, based on the performance probability contained in the received and/or determined QoS information.

According to a second aspect, there is provided a method of transmitting and/or receiving a data packet a TSN using resources scheduled based on a QoS information of a wireless network of the TSN.

The method according to the second aspect comprises:
- Transmitting, by a TSN element, a QoS information to a central TSN element, and/or
- Transmitting, by the TSN element, a network information to the central TSN element and/or to a further network element for determining the QoS information based on the transmitted network information,
- wherein the transmitted and/or determined QoS information comprises a performance probability regarding
   ∘ a time between successful transmissions of two consecutive data packets in the wireless network of the TSN and/or
   ∘ a number of consecutive data packet losses in the wireless network of the TSN;
   and
- Transmitting and/or receiving, by the TSN element, a data packet using resources scheduled by the central TSN element based on the performance probability contained in the transmitted and/or determined QoS information.

According to a third aspect, there is provided a central network element of a TSN. The central network element, also denoted as central TSN element, comprises, a non-transitory computer readable medium comprising machine-readable instructions, and a processor configured to load and to execute the machine-readable instructions to cause the central network element to execute the method according to the first aspect, and/or its embodiments. The central network element preferably is a central network configuration (CNC) of the TSN.

According to a fourth aspect, there is provided a network element of a TSN. The network element, also denoted as TSN element, comprises, a non-transitory computer readable medium comprising machine-readable instructions, and a processor configured to load and to execute the machine-readable instructions to cause the network element to execute the method according to the second aspect, and/or its embodiments. The central network element can be, for instance, a TSN bridge or TSN switch, preferably one of a logical TSN bridge or a wireless TSN bridge.

According to a fifth aspect, there is provided a computer program comprising machine-readable instructions to cause
- the central network element, preferably the CNC, as defined by the third aspect to execute the method according the first aspect, and/or its embodiments, and/or
- the network element, preferably the TSN bridge, as defined by the fourth aspect to execute the method according the second aspect, and/or its embodiments.

According to a sixth aspect, there is provided a non-transitory computer readable medium having stored thereon the computer program as defined by the fifth aspect.

According to a seventh aspect, there is provided a managed object of a TSN element, preferably a bridge delay managed object and/or a propagation delay managed object of a TSN bridge. The managed object comprises a plurality of data fields, wherein at least one of the data fields comprises a QoS information and the QoS information comprises a performance probability regarding
- a time between successful transmissions of two consecutive data packets in the wireless network of the TSN, preferably in the TSN element, and/or
- a number of consecutive data packet losses in the wireless network of the TSN, preferably in the TSN element,
for scheduling resources, by a central network element of the TSN, based on the performance probability. The information comprised by the managed object is used for scheduling resource in the TSN by the central TSN element, preferably the CNC. The managed object can be embodied in a data structure comprising the said plurality of data fields.

Preferably, the TSN comprises both a wired TSN and a wireless network. The wired TSN can be configured, e.g., as an Ethernet network according to IEEE 802.3. The wireless network can be a wireless Local Area Network (LAN), specifically a WiFi network, preferably according to IEEE 802.11 be, or a 3GPP network.

A TSN bridge can be configured via the Simple Network Management Protocol (SNMP) or YANG modules for configuration via NetConf or RESTconf. A TSN bridge may have one or multiple managed objects which describe its properties, e.g., a bridge delay per port pair according to IEEE 802.1Q-2022 Section 12.32.1 or a propagation delay per port according to IEEE 802.1Q-2022 Section 12.32.2.1.

The further network element could be a network element configured to host a TSN management and/or TSN orchestration function. The further network comprises, a non-transitory computer readable medium comprising machine-readable instructions, and a processor configured to load and to execute the machine-readable instructions to cause the further network element to receive the network information transmitted from the TSN element, determine the QoS information based on the network information, and transmit the determined QoS information to the central network element.

The QoS information contains a performance probability of the wireless network of the TSN. Here, the performance probability may regard a performance probability of individual or multiple network elements and/or individual or multiple network links of the wireless network. For instance, the performance probability may regard a TSN switch or bridge or a TSN link. The QoS information may contain a current or actual and/or a predicted or future performance probability of the wireless network of the TSN.

The performance probability preferably regards
- a time between successful transmissions of two consecutive data packets in a, particularly logical or wireless, TSN bridge of the wireless network of the TSN, and/or
- a number of consecutive data packet losses, specifically in a, particularly logical or wireless, TSN bridge of the wireless network of the TSN.

The performance probability can be understood as a probability to achieve a certain performance. The performance probability is preferably a performance probability of a TSN element. Here, the performance probability may relate to the performance of a TSN bridge, e.g., to a port or a port pair of the TSN bridge. Besides, the performance probability may be a performance probability of a wireless link, preferably between an access point and a station, of the wireless network comprises by the TSN.

The wireless link may be comprised by a logical TSN bridge, e.g., comprising both the access point and the station or corresponding 3GPP network elements. In other words, the wireless link is part of the logical TSN bridge. In this case, the QoS information comprising the performance probability may be configured as or part of a bridge delay object transmitted from the TSN bridge to a central TSN element, preferably the CNC, of the TSN. To this end, the bridge delay object may comprise a further field comprising, representing or indicating the performance probability.

As an alternative, the wireless link may represent a link between a TSN bridge and a further TSN element, particularly a TSN endpoint. In other words, the wireless link is not part of the TSN bridge. In this case, the QoS information comprising the performance probability may be configured as or part of a propagation delay object transmitted from the TSN bridge to a central TSN element, preferably the CNC, of the TSN. To this end, the propagation delay object may comprise a further field comprising, representing or indicating the performance probability.

The time between successful transmissions of consecutive data packets can be understood as a time difference between the successful reception of consecutive data packets. A successful transmission can be defined as a transmission that is successful both content-wise and timewise. More precisely, a successful transmission can be considered as a transmission in which the data packet is transmitted correctly, i.e., without error, and received within a predefined time or predefined deadline.

A consecutive data packet loss can be understood as corresponding to two consecutive data packets that are not transmitted successfully, i.e., that are received not within the predefined-time and/or not transmitted correctly, i.e., with error. A successful transmission may be a transmission which is acknowledged explicitly or implicitly, particularly by transmitting an acknowledgement (ACK).

The maximum time between successful transmissions of consecutive data packets and/or the maximum number of consecutive data packet losses in the wireless network of the TSN may depend on a survival time of an application of the TSN, i.e., a time the application may run without reception of a (valid) data packet. In other words, the maximum time and/or the maximum number defines a time and/or number respectively which is acceptable to or tolerable by the application. For an application with periodic data transmission, the requirement regarding the maximum time can be derived from the requirement regarding the maximum number and vice versa.

The introduced methods allow for a transmission of data in a TSN that accounts for the QoS requirements of an application regarding the maximum number of consecutive packet losses and/or the maximum time between successful transmission of consecutive packets in a wireless network of the TSN. The consideration of consecutive packet losses is particularly beneficial for mission critical applications, especially in the industrial automation domain, for which application outages due to insufficient QoS of a wireless domain of the TSN may have severe consequences. The proposed methods increase the reliability of such applications and allow to distribute resources of communication systems more efficiently by addressing the application's QoS requirements regarding consecutive packet losses in the wireless network of the TSN. In particular, the invention allows for introducing a performance probability of consecutive packet losses (including deadline misses) to TSN bridge or link managed objects.

In contrast to wireless QoS parameters usually providing only packet error rates by default, thus giving no insight into the statistical distribution of those packet errors, the introduced methods allow, by considering the consecutive packet loss statistics, scheduling resources in the TSN that factors in wireless characteristics, thereby making wireless TSN suitable for even more applications.

According to an embodiment, the method according to the first aspect further comprises:
- Receiving, by the central TSN element, a requirement information containing a QoS requirement of an application of the TSN regarding
   ∘ a maximum time between successful transmissions of consecutive data packets in the TSN and/or
   ∘ a maximum number of consecutive data packet losses in the TSN from a further central TSN element,
- wherein the resources are scheduled further based on the QoS requirement contained in the received requirement information.
The application of the TSN may require a transmission, specifically a stream, of data packets in the TSN. Here, the stream can be understood as a unidirectional flow of data packets in the TSN. Preferably, the application requires a stream of data packets from a first end point, specifically a talking element or talker of the TSN, to a second end point, specifically a listening element or listener, of the TSN. The talker may be a first, either stationary or non-stationary, end device and the listener a second, stationary or non-stationary, end device of the TSN. Talker and listener may be connected by one or multiple parallel or serial communication links and network elements of the TSN, e.g., TSN link(s), TSN bridge(s) etc. Data packets of the application may comprise payload like sensor data, multimedia data etc. For instance, a stream of data packets of an application may comprise a video stream. Accordingly, the application requires a specific QoS of the TSN, preferably depending on an application mode or state of the application. In addition to the maximum time and/or the maximum number the QoS requirement may comprise further QoS parameter(s), e.g., delay budget, survival time, cycle time, packet size, latency, a bandwidth, jitter, deadline for data packet delivery, packet loss ratio etc.

For accounting for the QoS requirement of the application, the method may further comprise a step of comparing, by the central TSN element, the received QoS information and the received requirement information. In other words, the method comprises checking, by the CNC, whether network capability and application requirements are fitting. Regarding the performance probability in terms of consecutive losses this includes comparing the probability for consecutive losses in the wireless network of the TSN bridge to the application's QoS requirement, particularly, cycle time, loss tolerance, delay budget and optionally survival time.

In case the comparison indicates an actual or imminent violation of the QoS requirement, scheduling resources may comprise rescheduling of resources and/or an adaption, preferably of an application mode, of the application. For instance, it the TSN bridge creates a probability of exceeding the application's tolerances to losses greater than a predefined threshold probability, scheduling resources may comprise at least one of: refusing scheduling, triggering reconfiguration, informing the application etc. This allows to avoid or immediately react to violations of the QoS requirement, thus effectively increasing the reliability of the application.

According to an embodiment, the method according to the first aspect further comprises
- Transmitting, by the central TSN element, a request for the QoS information and/or for the network information to the TSN element,
- wherein the received QoS information and/or received the network information is transmitted by the TSN element in response to the request.
The request may be transmitted from the central TSN element to the TSN element using a wired or wireless link between the central TSN element and the TSN element, e.g., a configuration link between the CNC and the TSN bridge. The request for the QoS information and/or for the network information may specify which QoS parameter and/or network parameter shall be contained in the QoS information and/or the network information to be transmitted to the central TSN element and/or the further network element. This allows to collect only the QoS information necessary for the CNC for scheduling resource, thus further increasing the efficiency of the method.

Here, according to an embodiment of the method of the first aspect, the request for the QoS information and/or for the network information is preferably transmitted in response to the received requirement information. In other words, requesting QoS information and/or network information from the TSN element by the central TSN element is triggered by the reception of the requirement information, preferably transmitted from the CUC to the CNC. Preferably, the received requirement information does not only trigger the request but may also represent a basis for the central TSN element to decide which QoS parameter and/or network parameter shall be requested from the TSN element.

For instance, the CUC could report the deadlines and consecutive loss values that are tolerated by an application from a talker of the application and/or a listener of the application to the CNC. The information on the application's requirements could be shared with the CUC by the listeners by using a stream update request message. The CNC could then ask for specifically these link description values from the (logical) TSN switch. Thereby, a size of the QoS information and/or network information transmitted by the TSN element could be reduced. Further, this allows to start collecting or updating already collected QoS information on demand, e.g., when a CUC requests to deploy an application in the TSN.

According to an embodiment of the method(s) of the first aspect and/or second aspect, the QoS information represents a performance probability of
- a maximum time between successful transmissions of two consecutive data packets in the wireless network of the TSN and/or
- a maximum number of consecutive data packet losses in the wireless network of the TSN
for a defined percentage of data packets transmitted in the wireless network. Here, the maximum time and/or the maximum number can be understood as a threshold which is expected not be exceeded by a defined percentage of data packets or is expected to be exceeded only by a defined percentage of data packets. The percentage of data packets may refer to a total number of data packets of an application transmitted in the TSN, specifically within a specified period, or refer to a predefined number of consecutive data packets.

As an example, the QoS information may specify a first defined percentage of data packets, e.g., 95%, to not exceed a first defined maximum number of losses, e.g., 1, and a second defined percentage of data packets, e.g., 99%, to not exceed a second defined maximum number of losses, e.g., 5. In other words, the QoS information expects a first defined percentage of data packets, e.g., at most 5%, to exceed the first defined maximum number of losses, e.g., 1, and a second defined percentage of data packets, e.g., at most 1%, to exceed the second defined maximum number of losses, e.g., 5. Accounting for the statistics on the consecutive packet losses when scheduling resources is preferably beneficial for mission-critical applications.

According to an embodiment of the method(s) of the first aspect and/or second aspect, the QoS information is part of or configured as a managed object of the TSN element. Here, the managed object may further comprise a delay information regarding a delay of the TSN element. The managed object may be a bridge delay managed object or a propagation delay managed object.

The propagation delay managed object may be a managed object for the propagation delay per port. Attributes of the propagation delay may comprise a time for the propagation delay. A propagation delay or link delay of a wireless link may be calculated based on the link speed. Here, the link speed represents the supported data rate of a wired or wireless link. The propagation delay represents a delay between two end stations. The propagation delay can be measured from a boundary of the network media and PHY at the egress of one station to the respective boundary at the ingress of another station.

The bridge delay managed object may be a managed object for the bridge delay per port pair. Attributes of the bridge delay managed object may comprise one of maximum and/or minimum values for a dependent or independent delay. The bridge delay managed object is more detailed than the propagation delay managed object and captures the per port pair and per traffic class delay of a frame passing the bridge. The bridge delay consists of two parts, i.e., the independent and dependent delay. The independent delay is independent from the frame length. The dependent delay is dependent on the frame length. Both delays are added together to determine the bridge delay.

Additionally, the bridge delay managed object and/or the propagation delay managed object comprise the performance probability regarding
- a time between successful transmissions of two consecutive data packets in the TSN element and/or
- a number of consecutive data packet losses in the TSN element.
To this end, the managed object(s) may comprise an additional field comprising the performance probability, as shown in Table 1 for the bridge delay managed object and in Table 2 for the propagation delay managed object.

**Table 1: Bridge delay managed object with additional field comprising the performance probability.**

| **Name** | **Data type** | **Operations supported** |
|---|---|---|
| independentDelayMin | unsigned integer | Read only access |
| independentDelayMax | unsigned integer | Read only access |
| dependentDelayMin | unsigned integer | Read only access |
| independentDelayMax | unsigned integer | Read only access |
| consecutive PacketLossTable | Table | Read/Write access |

**Table 2: Propagation delay managed object with additional field comprising the performance probability.**

| **Name** | **Data type** | **Operations supported** |
|---|---|---|
| txTransmissionDelay | unsigned integer | Read only access |
| consecutive PacketLossTable | Table | Read/Write access |

According to an embodiment of the method(s) of the first aspect and/or second aspect, the managed object of the TSN element comprises
- at least one data field representing, preferably comprising a defined maximum number of consecutive data packet losses in the wireless network of the TSN and/or a defined maximum time between successful transmissions of two consecutive data packets in the wireless network of the TSN, and
- at least one second data field representing, preferably indicating a corresponding required percentage of data packets for which the number of consecutive data packet losses in the wireless network of the TSN shall be smaller or equal to the defined maximum number and/or for which the time between successful transmission of two consecutive data packets in the wireless network of the TSN shall be smaller or equal to the defined maximum time.

Here, the performance probability may be comprised by the managed object by including a table or referring to a table, e.g., titled consecutive packet loss table. The table may be considered as a further managed object of the TSN element. The table comprise one or multiple entries including or representing a set of parameters characterizing the performance probability, as illustrated in Table 3. For each entry, the set of parameters may include at least one of a number of consecutive packets, a percentage of data packets not exceeding the given number of consecutive packets, an inter-frame time or inter-frame interval, a frame deadline.

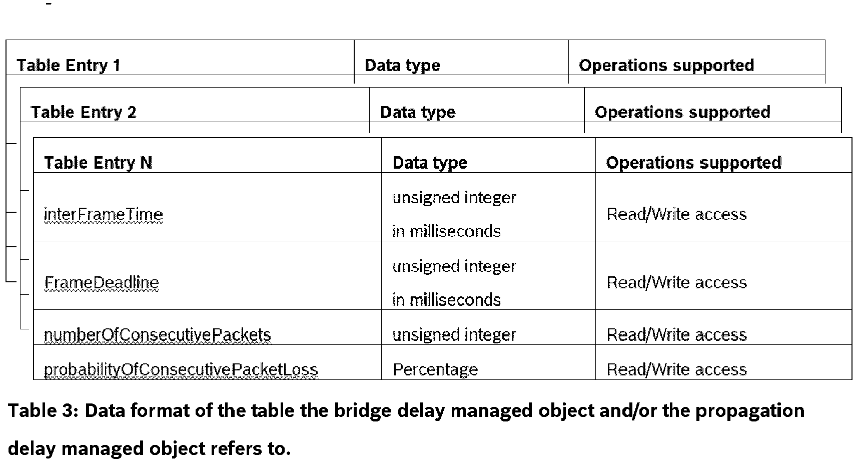

According to an embodiment of the method(s) of the first aspect and/or second aspect, the network information comprises one or multiple network parameter selected from a group comprising:
- a cycle time of an application requiring a stream of data packets transmitted via the wireless network,
- a size, specifically of a frame, of the data packets transmitted via the wireless network,
- a user mobility of a TSN element, specifically of the wireless network,
- channel conditions of network channels of the wireless network,
- a traffic load in the wireless network.
The network parameter representing the user mobility may contain the information whether the user, specifically configured as an end device, is static or mobile. In case the user is a mobile network element, the network parameter may comprise a maximum speed of the user. The network parameter representing the channel conditions may comprise past or historic and/or current and/or future channel conditions of wireless network channels in the TSN, e.g., represented by a SINR (Signal Interference Noise Ratio) or RSRP (Reference Signal Strength Indicator). Here, the network parameter may also characterize a dynamics of the network channels of the wireless network.

The QoS information can be determined based on the network information by the TSN element, the central TSN element, and/or the further network element. Preferably, the performance probability regarding consecutive packet losses is determined at least based on the cycle time of the application, the frame size, and the user mobility.

According to an embodiment of the method(s) of the first aspect and/or second aspect, the QoS information is determined using a statistical reference model, which is configured to output the performance probability based on the one or multiple network parameter as input parameter. Specifically, pre-defined values of the performance probability may be looked up based on current channel conditions and/or traffic load by the TSN switch and/or the CNC and/or the further network element. This allows to determine the QoS information when the application is running, thus further decreasing the risk of application outages.

According to an embodiment of the method(s) of the first aspect and/or second aspect, the QoS information is updated cyclically by cyclically determining the performance probability based on current values of the network parameter. Specifically, network parameter(s) representing, e.g., channel conditions, traffic load and/or the latency of data packets, could be logged by a monitoring function of the TSN switch and/or the CNC and/or the further network element. The logged or gathered data could then be used to regularly update the performance probability, i.e., the likelihood of consecutively missing the deadline. This allows to account for temporal variations of the QoS provided by the wireless network of the TSN, thus further increasing the reliability of the applications of the TSN.

According to an embodiment of the managed object,
- at least one of the data fields represents, preferably comprises a defined maximum number of consecutive data packet losses in the wireless network of the TSN and/or a defined maximum time between successful transmissions of two consecutive data packets in the wireless network of the TSN, and
- at least one second data field represents, preferably comprises a corresponding required percentage of data packets in the wireless network of the TSN for which the number of consecutive data packet losses shall be smaller or equal to the defined maximum number and/or for which the time between successful transmission of two consecutive data packets shall be smaller or equal to the defined maximum time.

This allows to take efficiently report the consecutive packet loss statistics and/or the statistics on data packets not exceeding the defined maximum time to the CNC further improving the scheduling in the TSN.

According to a further aspect, there is provided a TSN, preferably comprising a wired TSN and a wireless network, wherein the TSN comprises at least one TSN element according to the third aspect and a central network element according to the fourth aspect. The TSN element may be a TSN bridge, e.g., a wireless TSN bridge or a logical TSN bridge. The central network element may be a CNC. Preferably, the TSN further comprises a further central network element, specifically a CUC, and at least one, specifically at least two, TSN end devices or TSN endpoints.

Moreover, there is provided a method of operating the proposed TSN, wherein the method comprises the steps of the methods according to the first and the second aspect, and/or its embodiments.

The non-transitory computer readable medium is preferably configured to store the computer program to be executed by a processor of the (central) network element. The non-transitory computer readable media may include RAM, ROM, EEPROM, and any other non-volatile storage device.

### Description of the figures

Exemplary embodiments of the present invention are depicted in the figures, which are not to be construed as limiting the claims, and are explained in greater detail below.
- Fig. 1: schematically shows the architecture of a communication network according to an aspect of the invention;
- Fig. 2: schematically shows the architecture of Fig. 1 with a logical TSN bridge according to an aspect of the invention;
- Fig. 3: schematically shows the architecture of Fig. 1 with a wireless TSN bridge according to an aspect of the invention;
- Fig. 4: schematically illustrates methods according to the first aspect of the invention;
- Fig. 5: schematically illustrates methods according to the second aspect of the invention; and
- Fig. 6: schematically illustrates a method of operating a TSN according to an aspect of the invention.

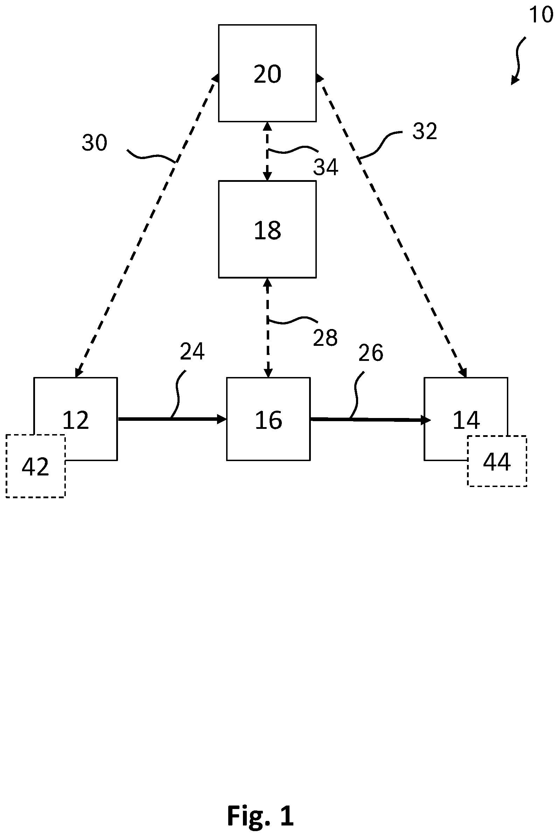

Fig. 1 schematically shows the architecture of a TSN 10 according to an aspect of the invention.

The TSN 10 comprises a first TSN element 12 configured as a TSN talker 12 and a second TSN element 14 configured as a TSN listener 14. Besides, the TSN 10 comprises at least one further TSN element 16 configured as a TSN switch 16 or TSN bridge 16. The TSN bridge 16 may be a logical TSN bridge 16 comprising one or more wireless links. Moreover, the TSN 10 comprises a CNC 18 and a CUC 20.

The TSN talker 12 is configured to transmit data packets to the TSN bridge 16 using a TSN link 24. The TSN bridge 16 is configured to receive data packets transmitted from the TSN talker 12 using the TSN link 24 and to transmit data packets to the TSN listener 14 using the TSN link 26. In addition, the TSN bridge 16 is configured to transmit control information to and/or receive control information from the CNC 18 using the configuration link 28. The TSN listener 14 is configured to receive data packets transmitted from the TSN bridge 16 using the TSN link 26.

The TSN talker 12 and the TSN listener 14 are configured to transmit control information to and/or receive control information from the CUC 20 using the configuration links 30, 32. The CUC is configured to transmit control information to and/or receive control information from the TSN talker 12 and the TSN listener 14 using the configuration links 30, 32 as well as to and from the CNC 18 using a configuration link 34. The CNC 18 is configured to transmit control information to and/or receive control information from the CUC 20 using the configuration link 34 and from and to the TSN bridge 16 using the configuration link 28.

Specifically, the CUC 20 is configured to receive requirements from the talker 12 and/or the listener 14 and to communicate them to the CNC 18. The CNC 18 is configured to receive consolidated requirements from the CUC 20, to schedule streams of data packets in the TSN 10 and to configure the TSN bridge 16.

An application of the TSN 10 may require a stream of data packets from a transmitting part 42 of the talker 12 via the TSN bridge 16 to a receiving part 44 of the listener 14. Here, the application may require a specific end-to-end QoS (E2E QoS), i.e., regarding the QoS for a transmission of the data packet from the talker 12 to the listener 14. As an example, the E2E QoS includes a maximum time between successful transmissions of consecutive data packets from the talker 12 to the listener 14. Additionally or alternatively, the E2E QoS includes a maximum number of consecutive data packet losses between the talker 12 and the listener 14.

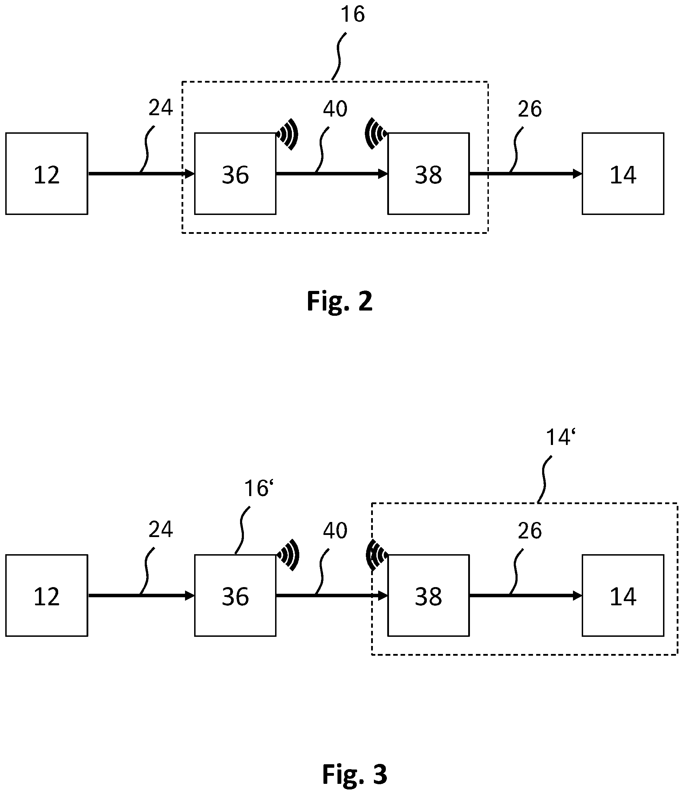

According to this embodiment, a transmission path of a data packet from the transmitting part 42 of the talker 12 to the receiving part 44 of the 14 comprises at least one wireless link as illustrated in more detail in Fig. 2 and 3. A wireless link may, at least temporarily, reduce the QoS of the TSN 10 significantly, e.g., due to significant delays and/or loss of data packets in the wireless link.

Accounting for delays or a packet loss rate, however, may not be sufficient when scheduling resources, particularly for many mission-critical applications, e.g., in the industrial automation domain. Many of these applications formulate a requirement on the survival time, which is the amount of time for which it can operate without receiving a data packet. When accounting for the packet loss probability only - without considering the probability of consecutive packet losses tolerable by or acceptable for the application - resources are not distributed efficiently. In an extreme example, an application with a survival time corresponding to the transmission of two packets can operate at a packet loss probability of 50%, if no two packets are lost consecutively.

For the purpose of accounting for consecutive packet loss statistics when scheduling resources in the TSN 10, the CNC 18 comprises a non-transitory computer readable medium comprising machine-readable instructions, and a processor configured to load and to execute the machine-readable instructions to cause the CNC 18 to
- receive a QoS information transmitted from the TSN bridge 16 to the CNC 18, wherein the received QoS information comprises a performance probability regarding
   ∘ a time between successful transmissions of two consecutive data packets in the wireless network of the TSN 10, and/or
   ∘ a number of consecutive data packet losses in the wireless network of the TSN,
   and
- schedule resources based on the performance probability contained in the received QoS information.

Accordingly, the TSN bridge 16 comprises a non-transitory computer readable medium comprising machine-readable instructions, and a processor configured to load and to execute the machine-readable instructions to cause the TSN bridge 16 to
- transmit a QoS information to the CNC 18, wherein the transmitted determined QoS information comprises a performance probability regarding
   ∘ a time between successful transmissions of two consecutive data packets in the wireless network of the TSN 10 and/or
   ∘ a number of consecutive data packet losses in the wireless network of the TSN 10,
   and
- transmit and/or receive a data packet using resources scheduled by the CNC 18 based on the performance probability contained in the transmitted QoS information.

The QoS information may be part of or configured as a managed object of the TSN bridge 16. Here, the managed object may be configured to specifically account for consecutive packet losses in the one or multiple wireless link(s) in the TSN 10. In other words, it is proposed to enhance managed objects of the TSN 10 to account for the probabilities of consecutive packet losses in the wireless links in the TSN 10.

According to a first embodiment of the TSN 10, the TSN bridge 16 is a logical TSN bridge 16 as illustrated in Fig. 2. Here, the TSN bridge 16 comprises at least two TSN elements 36, 38 connected by a wireless link 40. In this embodiment, the at least two TSN elements 36, 38 comprise an access point 36 and a station 38, wherein the wireless link 40 is preferably a WiFi link 40. Data packets of an application of the TSN 10 are transmitted from the talker 12 via the access point 36 and the station 38 to the listener 14. Alternatively or additionally, the logical TSN bridge 16 may comprise a 3GPP network with a user equipment (UE) 36 and a base station (gNB) 38 connected with each other by the wireless link 40. Notably, a delay in the wireless link 40 may be less deterministic and exhibit significantly more fluctuations in time compared to a delay of the wired TSN links 24, 26.

For a logical TSN bridge 16, the wireless link 40 is not visible to the CNC 18. Consequently, it is proposed to include the QoS information with the performance probability of the wireless link 40 in a bridge delay managed object transmitted from the TSN bridge 16 to the CNC 18. To this end, the bridge delay managed object comprises a further field comprising, representing or indicating the performance probability. Preferably, the bridge delay managed object of the logical TSN bridge 16 includes the QoS information of a variable link delay of the internal wireless link 40 and a statistics on consecutive packet losses along the wireless link 40.

According to a second embodiment of the TSN 10, the TSN bridge 16' is a wireless TSN bridge 16' as illustrated in Fig. 3. Here, the TSN bridge 16' comprises the access point 36. The second TSN element 14' comprises the station 38 and the listener 14. The TSN bridge 16' is connected via a wireless link 40 with the station 38. For the wireless TSN bridge 16', the wireless link 40 is visible to the CNC 18, i.e., the CNC 18 is aware of the wireless link 40. Consequently, it is proposed to include the QoS information with the performance probability of the wireless link 40 in a propagation delay managed transmitted from the TSN bridge 16 to the CNC 18. To this end, the propagation delay managed object comprises a further field comprising, representing or indicating the performance probability. Preferably, the propagation delay object of the wireless TSN bridge 16' includes the QoS information of a variable link delay of the wireless link 40 and a statistics on consecutive packet losses along the wireless link 40,

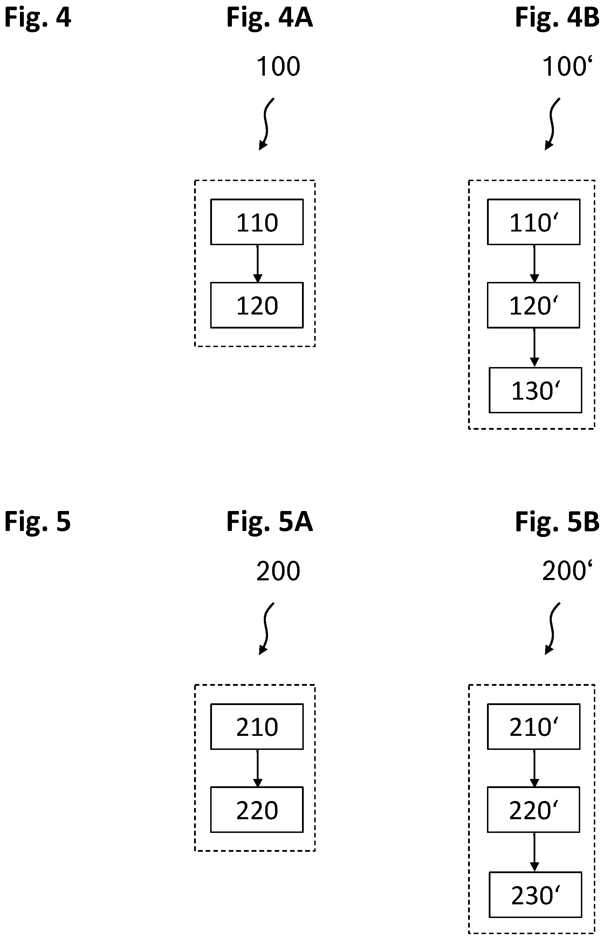

Fig. 4 schematically illustrates methods of scheduling resources in a TSN according to embodiments of the first aspect of the invention.

Fig. 4A schematically illustrates a method 100 of scheduling resources in a TSN comprising a wired TSN and a wireless network based on a QoS information of the wireless network according to an embodiment. The TSN may be the TSN 10 illustrated in Fig. 1

In step 110, a QoS information transmitted from a TSN element or a further network element is received by the central TSN element, wherein the received QoS information comprises a performance probability regarding
- a time between successful transmissions of two consecutive data packets in the wireless network of the TSN, and/or
- a number of consecutive data packet losses in the wireless network of the TSN.

In step 120, resources are scheduled by the central TSN element based on the performance probability contained in the received QoS information.

Fig. 4B schematically illustrates a method 100' of scheduling resources in a TSN comprising a wired TSN and a wireless network based on a QoS information of the wireless network according to an alternative embodiment.

In step 110', a network information transmitted from a TSN element, preferably a TSN switch, is received by the central TSN element, preferably a CNC.

In step 120', a QoS information is determined based on the received network information by the central TSN element, wherein the determined QoS information comprises a performance probability regarding
- a time between successful transmissions of two consecutive data packets in the wireless network of the TSN, and/or
- a number of consecutive data packet losses in the wireless network of the TSN.

In step 130', resources are scheduled by the central TSN element based on the performance probability contained in the determined QoS information.

Fig. 5 schematically illustrates methods of transmitting and/or receiving a data packet in a TSN according to embodiments of the second aspect of the invention.

Fig. 5A schematically illustrates a method 200 of transmitting and/or receiving a data packet in a TSN using resources scheduled based on a QoS information of a wireless network of the TSN, wherein the TSN further comprises a wired TSN. The TSN may be the TSN 10 illustrated in Fig. 1

In step 210, a QoS information is transmitted from a TSN element, preferably a TSN switch, to a central TSN element, preferably a CNC, wherein the transmitted QoS information comprises a performance probability regarding
- a time between successful transmissions of two consecutive data packets in the wireless network of the TSN, and/or
- a number of consecutive data packet losses in the wireless network of the TSN.

In step 220, a data packet is transmitted and/or received by the TSN element using resources scheduled by the central TSN element based on the performance probability contained in the transmitted QoS information.

Fig. 5B schematically illustrates a method 200' of transmitting and/or receiving a data packet in a TSN using resources scheduled based on a QoS information of a wireless network of the TSN according to an alternative embodiment.

In step 210', a network information is transmitted from a TSN element, preferably a TSN switch, to a central TSN element, preferably a CNC.

In step 220', a QoS information is determined by the central TSN element based on the transmitted network information, wherein the determined QoS information comprises a performance probability regarding
- a time between successful transmissions of two consecutive data packets in the wireless network of the TSN, and/or
- a number of consecutive data packet losses in the wireless network of the TSN.

In step 230', a data packet is transmitted and/or received by the TSN element using resources scheduled by the central TSN element based on the performance probability contained in the determined QoS information.

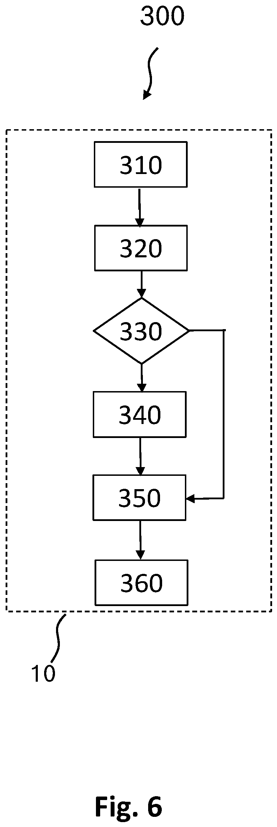

Fig. 6 illustrates a method 300 of operating a TSN according to a further embodiment of the invention. The TSN may be the TSN 10 illustrated in Fig. 1.

In step 310, a request for stream of data packets of an application of the TSN 10 is transmitted from a central TSN element, preferably a CUC, to a further central TSN element, preferably a CNC. The stream requires a transmission of data packets from a talker of the TSN 10 to a listener of the TSN 10. Here, the stream requires a specific QoS. To this end, respective QoS requirement information is provided from the central TSN element to the further central TSN element. For the stream a stream requirement may be defined by minimum inter-frame intervals, maximum frame size and/or a frame deadline.

In step 320, QoS information is collected by the further central TSN element, preferably the CNC. The QoS information comprises a performance probability regarding the QoS of the TSN 10. More precisely, the QoS information comprises the performance probability for at least one of the TSN elements, preferably a TSN bridge, e.g., all TSN bridges, that are part of the transmission path of the stream. In other words, performance probability or capabilities from affected TSN elements, e.g., TSN bridges, are collected and/or updated by the CNC. Here, the QoS information preferably covers also the links between the TSN elements. These capabilities are reported by the TSN elements although the links are not part of the bridge itself from a technical point of view.

In step 330, it is checked whether a performance probability for
- a time between successful transmissions of two consecutive data packets in the wireless network of the TSN, and/or
- a number of consecutive data packet losses in the wireless network of the TSN
has already been provided to the further central TSN element, preferably the CNC. For instance, it may be checked whether for a given stream requirement, e.g., for a frame deadline and/or for an inter frame interval, a respective consecutive packet loss information is included in a QoS information table entry at the CNC.

If the performance probability has not already been provided to the further central TSN element, the performance probability is determined based on network information by the further central TSN element in step 340. The network information may comprise historic data, tested network parameter values, default network parameter values, network parameter values measured internally by a TSN element, potentially updated regularly, as impacted by channel condition, etc. Accordingly, respective entries of the QoS information table for the given stream requirement can be populated.

If the performance probability has already been provided to the further central TSN element, step 340 is skipped, and the method continues with step 350.

In step 350, resources are scheduled by the further central TSN element, preferably by identifying optimal schedule and route based on the performance probability of the TSN element and on matching the performance probability with the QoS requirements from the central TSN element.

In step 360, the stream of the application is deployed.

## Claims

1. A method (100; 100') of scheduling resources in a time sensitive network (TSN) (10) comprising a wired TSN (10) and a wireless network based on a quality of service (QoS) information of the wireless network, wherein the method (100; 100') comprises:
- Receiving (110) a QoS information transmitted from a TSN element (16; 16') or a further network element to a central TSN element (18), and/or
- Receiving (110') a network information transmitted from the TSN element (16; 16') to the central TSN element (18) and determining (120') the QoS information based on the received network information by the central TSN element (18),
- wherein the received and/or determined QoS information comprises a performance probability regarding
∘ a time between successful transmissions of two consecutive data packets in the wireless network of the TSN (10), and/or
∘ a number of consecutive data packet losses in the wireless network of the TSN (10),
and
- scheduling resources (120; 130'), by the central TSN element (18), based on the performance probability contained in the received and/or determined QoS information.

2. The method (100; 100') according to claim 1, further comprising:
- Receiving, by the central TSN element (18), a requirement information containing a QoS requirement of an application of the TSN (10) regarding
∘ a maximum time between successful transmissions of consecutive data packets in the TSN (10) and/or
∘ a maximum number of consecutive data packet losses in the TSN (10)
from a further central TSN element (20),
- wherein the resources are scheduled further based on the QoS requirement contained in the received requirement information.

3. The method (100; 100') according to claim 1 or 2, further comprising:
- Transmitting, by the central TSN element (18), a request for the QoS information and/or for the network information to the TSN element (16; 16'),
- wherein the received QoS information and/or received the network information is transmitted by the TSN element (16; 16') in response to the request.

4. The method (100; 100') according to claim 3, wherein the request for the QoS information and/or for the network information is transmitted in response to the received requirement information.

5. A method (100; 100') of transmitting and/or receiving a data packet a time sensitive network (TSN) (10) using resources scheduled based on a quality of service (QoS) information of a wireless network of the TSN (10), wherein the TSN (10) further comprises a wired TSN (10) and the method (100; 100') comprises:
- Transmitting (210), by a TSN element (16; 16'), a QoS information to a central TSN element (18), and/or
- Transmitting (210'), by the TSN element (16; 16'), a network information to the central TSN element (18) and/or to a further network element for determining (220') the QoS information based on the transmitted network information,
- wherein the transmitted and/or determined QoS information comprises a performance probability regarding
∘ a time between successful transmissions of two consecutive data packets in the wireless network of the TSN (10) and/or
∘ a number of consecutive data packet losses in the wireless network of the TSN (10);
and
- Transmitting and/or receiving (220; 230'), by the TSN element (16; 16'), a data packet using resources scheduled by the central TSN element based on the performance probability contained in the transmitted and/or determined QoS information.

6. The method(s) (100; 100'; 200; 200') according to one of the proceeding claims, wherein the QoS information represents a performance probability of
- a maximum time between successful transmissions of two consecutive data packets in the wireless network of the TSN (10) and/or
- a maximum number of consecutive data packet losses in the wireless network of the TSN (10)
for a defined percentage of data packets transmitted in the wireless network.

7. The method(s) (100; 100'; 200; 200') according to one of the proceeding claims, wherein the QoS information is part of or configured as a managed object of the TSN element (16; 16'), preferably of a bridge delay managed object and/or a propagation delay managed object.

8. The method(s) (100; 100'; 200; 200') according to claim 7, wherein the managed object of the TSN element (16; 16') comprises
- at least one data field representing, preferably comprising a defined maximum number of consecutive data packet losses in the wireless network of the TSN (10) and/or a defined maximum time between successful transmissions of two consecutive data packets in the wireless network of the TSN (10), and
- at least one second data field representing, preferably indicating a corresponding required percentage of data packets in the wireless network of the TSN (10) for which the number of consecutive data packet losses shall be smaller or equal to the defined maximum number and/or for which the time between successful transmission of two consecutive data packets in the wireless network of the TSN (10) shall be smaller or equal to the defined maximum time.

9. The method(s) (100; 100'; 200; 200') according to one of the proceeding claims, wherein the network information comprises one or multiple network parameter selected from a group comprising:
- a cycle time of an application requiring a stream of data packets transmitted via the wireless network,
- a size, specifically of a frame, of the data packets transmitted via the wireless network,
- a user mobility of a TSN element, specifically of the wireless network,
- channel conditions of network channels of the wireless network,
- a traffic load in the wireless network.

10. A central network element (18) of a time sensitive network (TSN) (10), preferably a central network configuration (CNC), comprising
- a non-transitory computer readable medium comprising machine-readable instructions, and
- a processor configured to load and to execute the machine-readable instructions to cause the central network element (18), preferably the CNC (18), to execute the method (100; 100') according to one of claims 1 to 4 or 6 to 9.

11. A network element (16; 16') of a time sensitive network (TSN) (10), preferably a TSN bridge (16; 16'), comprising
- a non-transitory computer readable medium comprising machine-readable instructions, and
- a processor configured to load and to execute the machine-readable instructions to cause the network element (16; 16'), preferably the TSN bridge (16; 16'), to execute the method (200; 200') according to one of claims 5 to 9.

12. A computer program comprising machine-readable instructions to cause
- the network element (16; 16'), preferably the TSN bridge (16; 16'), of claim 10 to execute the method (100; 100') according to one of claims 1 to 4 or 6 to 9, and/or
- the central network element (18), preferably the CNC (18), of claim 11 to execute the method (200; 200') according to one of claims 5 to 9.

13. A non-transitory computer readable medium having stored thereon the computer program of claim 12.

14. A managed object of a time sensitive network (TSN) (10) element, preferably a bridge delay managed object and/or a propagation delay managed object of a TSN bridge (16; 16'), wherein
- the managed object comprises a plurality of data fields,
- at least one of the data fields comprises a quality of service (QoS) information, and
- the QoS information comprises a performance probability regarding
∘ a time between successful transmissions of two consecutive data packets in the wireless network of the TSN (10), preferably in the TSN element (16; 16'), and/or
∘ a number of consecutive data packet losses in the wireless network of the TSN (10), preferably in the TSN element (16; 16'),
for scheduling resources, by a central network element of the TSN (10), based on the performance probability.

15. The managed object according to claim 14, wherein
- at least one of the data fields represents, preferably comprises a defined maximum number of consecutive data packet losses in the wireless network of the TSN (10) and/or a defined maximum time between successful transmissions of two consecutive data packets in the wireless network of the TSN (10), and
- at least one second data field represents, preferably comprises a corresponding required percentage of data packets in the wireless network of the TSN (10) for which the number of consecutive data packet losses shall be smaller or equal to the defined maximum number and/or for which the time between successful transmission of two consecutive data packets in the wireless network of the TSN (10) shall be smaller or equal to the defined maximum time.
